# EUROPÄISCHE PATENTANMELDUNG

(11) **EP 2 018 976 A1**
(43) Veröffentlichungstag der Anmeldung: **28.01.2009**
(21) Anmeldenummer: 08013068.5
(22) Anmeldetag: 19.07.2008
(51) Int. Cl.: B60B 35/10, B60B 11/06

(54) **Selbstfahrende Erntemaschine**

(30) Priorität: 27.07.2007 DE 102007035762
(71) Anmelder: Holmer Maschinenbau GmbH, 84069 Eggmühl (DE)
(72) Erfinder: Hirthammer, Otto, 93128 Regenstauf (DE)
(74) Vertreter: Graf, Helmut

(57) **Zusammenfassung**

Bei einer selbstfahrende Erntemaschine mit wenigstens zwei zumindest teilweise lenkbaren und angetriebenen Fahrzeugachsen, von denen wenigstens eine Fahrzeugachse, beispielsweise eine rückwärtige Fahrzeugachse (16) von Felgen (8.1,9.1) und Reifen (8.2,9.2) gebildete Radanordnungen (7) aufweist bestehen die Radanordnungen (7) der wenigstens einen Fahrzeugachse (16) jeweils aus zwei Rädern (8,9), die über Führungselemente (11) in Richtung einer gemeinsamen Radachse (RA) um einen vorgegebenen Hub verschiebbar an der Radachse (RA) oder an einem mit der Radachse (RA) verbundenen Tragelement (14) in Richtung der Radachse (RA) zwischen einer eingefahrenen Position und einer ausgefahrenen Position bewegbar sind.

## Beschreibung

Die Erfindung bezieht sich auf eine selbstfahrende Erntemaschine gemäß Oberbegriff Patentanspruch 1.

Erntemaschinen dieser Art sind bekannt. Bekannt ist auch, dass derartige Erntemaschinen, insbesondere auch solche zum Roden von Wurzelfrüchten, wie z.B. Rübenerntemaschinen oder Kartoffelerntemaschinen für immer größere Leistungen gebaut werden, mit der Folge eines hohen Fahrzeuggewichtes und damit verbunden mit einer hohen Bodenbelastung, insbesondere auch dann, wenn derartige Erntemaschinen, wie allgemein üblich, mit einem das Erntegut aufnehmenden großvolumigen Bunker ausgebildet sind.

Um beim Fahren im Gelände bzw. auf einem Feld einen übermäßig hohen Bodendruck und damit eine übermäßige Bodenverdichtung zu vermeiden, ist es üblich, für die Radanordnungen derartiger Erntemaschinen Räder mit möglichst großem Raddurchmesser, beispielsweise mit einem Raddurchmesser bis zu etwa 200 cm und großer Radbreite einzusetzen, womit allerdings vielfach wegen der zunehmenden Größe von Erntemaschinen vorgeschriebene oder empfohlene maximale Grenzwerte für den Bodendruck nicht oder nur sehr bedingt eingehalten werden können.

Aufgabe der Erfindung ist es, eine Erntemaschine aufzuzeigen, die diese Nachteile vermeidet. Zur Lösung dieser Aufgabe ist eine Erntemaschine entsprechend dem Patentanspruch 1 ausgebildet.

Bei der erfindungsgemäßen Erntemaschine ist die Radanordnungen zumindest einer Fahrzeugachse so ausgeführt, dass sie jeweils wenigstens zwei Räder aufweisen, sodass auch beim Fahren im Gelände bzw. auf dem Feld die Bodenbelastung auf jeweils zwei Räder verteilt wird und sich dadurch praktisch eine Halbierung des Bodendruckes ergibt. Die Verwendung von jeweils zwei Rädern an jeder Fahrzeugseite bedingt aber eine erhöhte Fahrzeugbreite, die die für das Fahren auf öffentlichen Straßen und Wegen zulässige maximale Fahrzeugbreite wesentlich übersteigt, und zwar insbesondere dann, wenn für die Stabilität der Erntemaschine beim Fahren im Gelände bzw. auf dem Feld ein ausreichend großer Radabstand zwischen den Radanordnungen der betreffenden Fahrzeugachse eingehalten ist. Um dennoch ein Fahren auf öffentlichen Straßen und Wegen zu ermöglichen, sind die Radanordnungen in Richtung ihrer Radachse einfahrbar und ausfahrbar, und zwar gesteuert durch einen hydraulischen Antrieb, sodass das Ein- und Ausfahren auch im Gelände bequem vom Fahrstand der Erntemaschine aus gesteuert werden kann.

Ist die betreffende Fahrzeugachse lenkbar, so sind bevorzugt Mittel vorgesehen, die im eingefahrenen Zustand der Radanordnungen die Lenkung blockiert oder aber auf einen Lenkwinkel begrenzt, der wesentlich kleiner ist als der Lenkwinkel im ausgefahrenen Zustand der Radanordnungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:

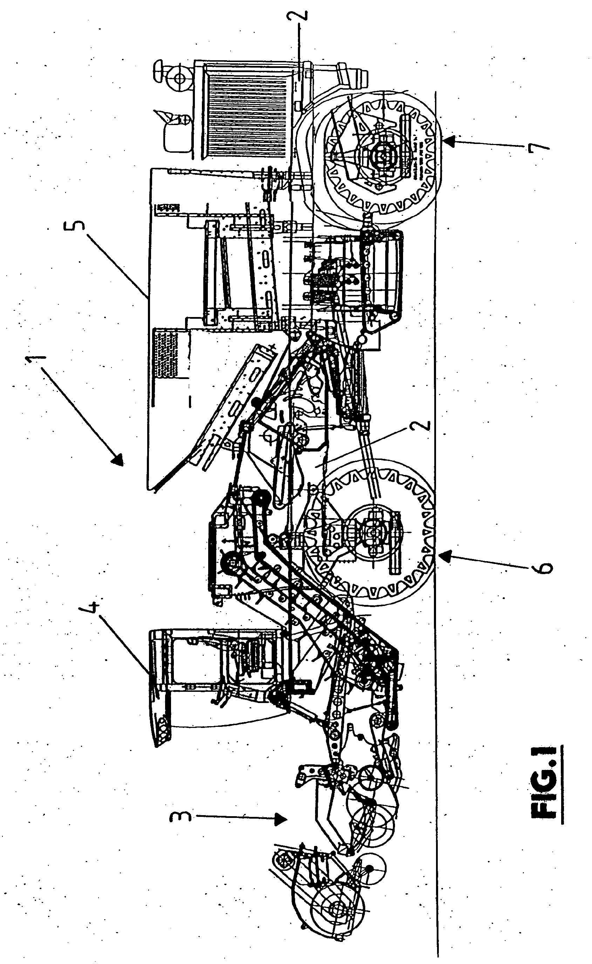

- Fig. 1: in vereinfachter Darstellung und in Seitenansicht eine selbstfahrende Erntemaschine insbesondere zum Ernten von Wurzelfrüchten durch Roden, beispielsweise zum Roden von Zuckerrüben;
- Fig. 2 u. 3: jeweils in vereinfachter Darstellung Schnitte durch eine Radanordnung einer angetriebenen und lenkbaren Fahrzeugachse des Erntefahrzeugs in verschiedenen Betriebszuständen, d.h. im eingefahrenen bzw. ausgefahrenen Zustand;

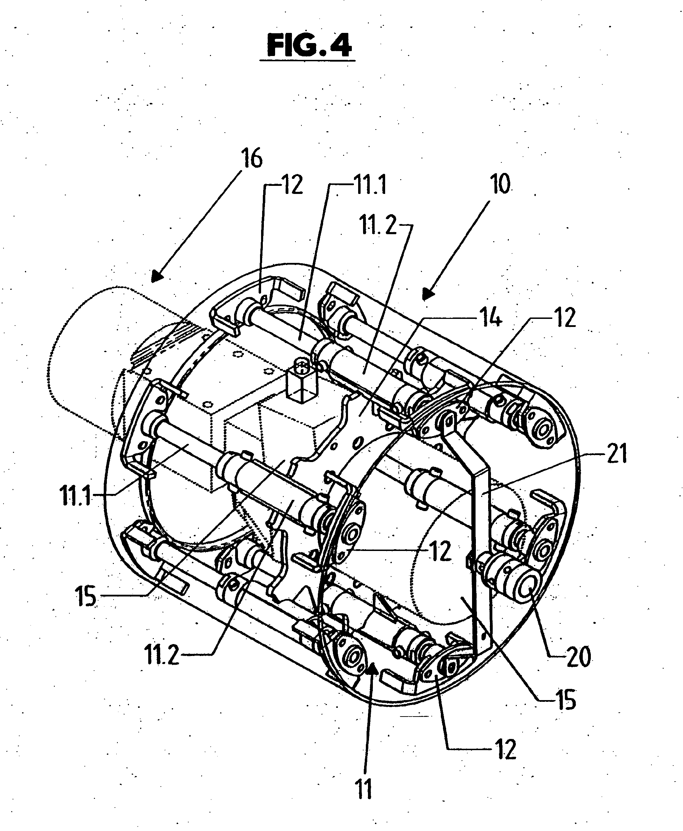

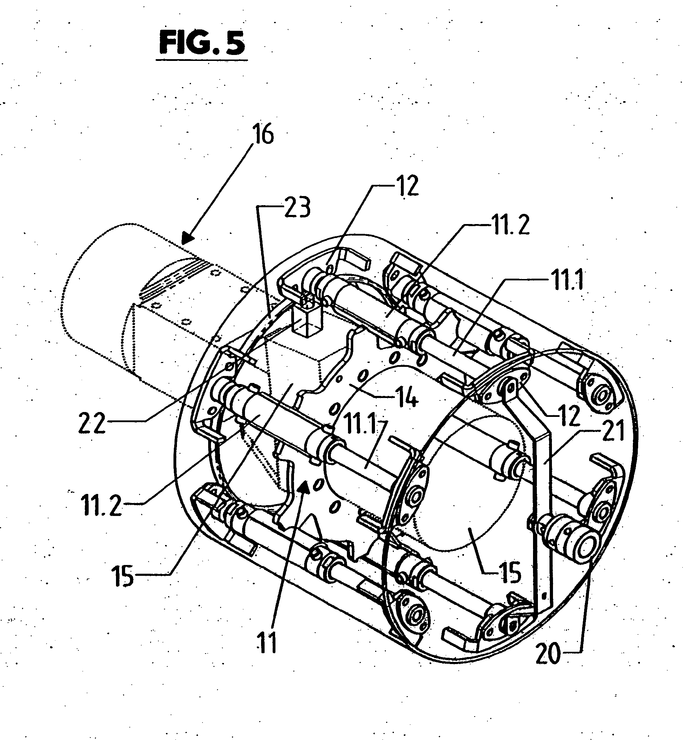

- Fig. 4 u. 5: jeweils in perspektivischer Einzeldarstellung einen als Radtrommel ausgebildeten Radträger der Radanordnung der Figuren 2 und 3 in den unterschiedlichen Betriebszuständen.

In den Figuren ist 1 eine selbstfahrende Erntemaschine beispielsweise zum mehrreihigen Roden von Wurzelfrüchten, z.B. Zuckerrüben aus der Gare. Die Erntemaschine 1 besteht hierfür in bekannter Weise aus einem beispielsweise zweiteiligen Fahrzeugrahmen 2 mit einem Rodeaggregat 3 und einem Fahrstand oder Fahrerhaus 4 an einem vorderen Fahrzeugteilrahmen und mit einem Bunker zur Aufnahme des Erntegutes am rückwärtigen Fahrzeugteilrahmen.

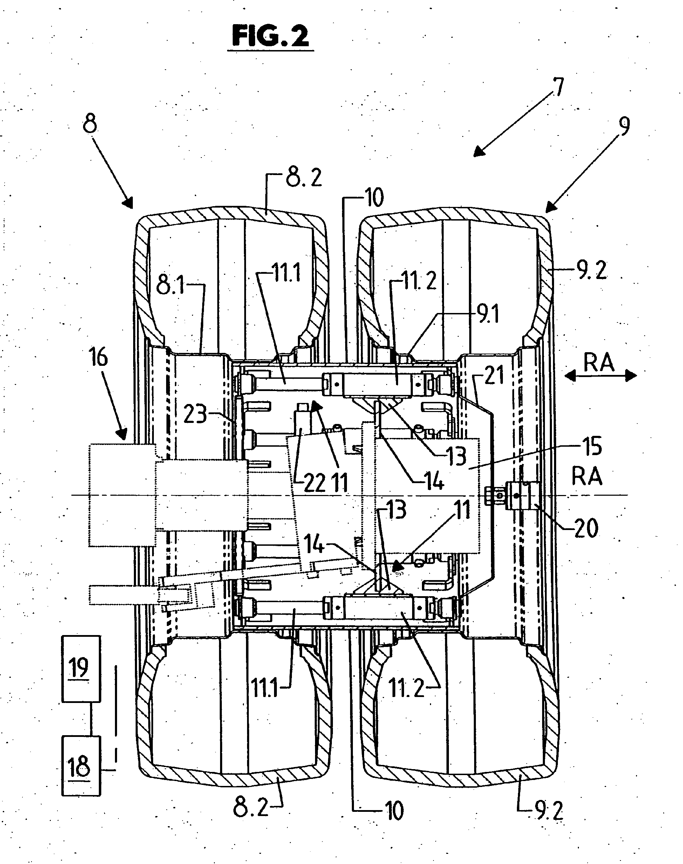

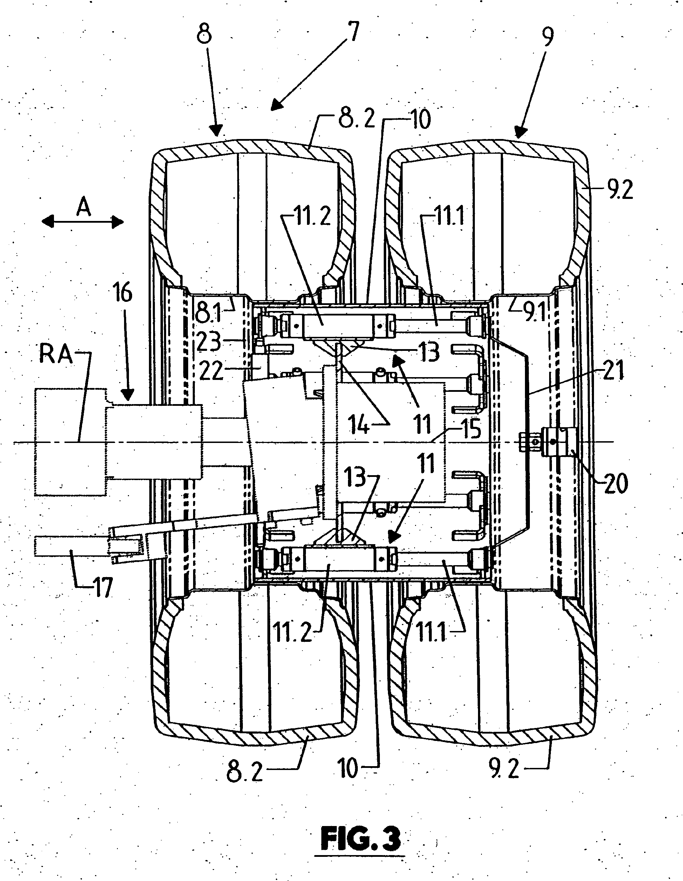

Die Erntemaschine 1 besitzt weiterhin am Fahrzeugrahmen 2 zwei jeweils angetriebene und lenkbare Fahrzeugachsen mit jeweils zwei Radanordnungen 6 (vordere Fahrzeugachse) bzw. 7 (rückwärtige Fahrzeugachse). Insbesondere bei hohen Leistungen und hohen Fassungsvermögen des Bunkers 5 weist die Erntemaschine 1 ein hohes Gewicht auf. Zur Vermeidung einer unzulässig hohen Bodenbelastung bzw. Bodenverdichtung während des Rodebetriebes besitzen die luftbereiften Räder der Radanordnungen 6 und 7 einen entsprechend großen Durchmesser. Weiterhin sind zumindest die beiden Radanordnungen 7 einer Fahrzeugachse, z.B. der hinteren Fahrzeugachse entsprechend den Figuren 2 und 3 jeweils als Doppel- oder Zwillingsradanordnung mit zwei Rädern 8 und 9 ausgebildet.

Jedes Rad 8 bzw. 9 besteht im Detail aus einer Radfelge 8.1 bzw. 9.1 mit Reifen 8.2 bzw. 9.2. Die beiden Felgen 8.1 und 9.2 sind in geeigneter Weise, beispielsweise durch Verschweißen, an der Außenfläche einer Radtrommel 10 diese konzentrisch und achsgleich umschließend befestigt. Innerhalb der Radtrommel 10 sind mehrere, d.h. bei der dargestellten Ausführungsform insgesamt sechs hydraulische Kolben-Zylinder-Anordnungen 11 vorgesehen, die jeweils aus einem Zylinder 11.1 und einer durchgehenden Kolbenstange 11.2 mit einem nicht dargestellten im Zylinder 11.1 aufgenommenen Kolben bestehen und mit der Achse ihrer Kolbenstangen parallel zur Radachse RA bzw. zur Achse der Radtrommel 10 in gleichmäßigen Winkelabständen um diese Achse verteilt vorgesehen sind. Die Kolbenstangen 11.1 der der Innenfläche der Radtrommel 10 unmittelbar benachbarten Kolben-Zylinder-Anordnungen 11 sind jeweils beidendig an mit der Radtrommel 10 verbundenen Lagern 12 gehalten.

Die Zylinder 11.2 der Kolben-Zylinder-Anordnungen 11 sind in ihrer Mitte jeweils über ein Verbindungsstück 13 mit einem Tragring 12 verbunden, der mit seiner Achse achsgleich mit der Radachse RA angeordnet ist und mit dem die von den Rädern 8 und 9, der Radtrommel 10 und dem Tragring 11 gebildete Radanordnung 7 in der üblichen Weise, beispielsweise unter Verwendung von Schrauben oder Muttern abnehmbar an dem lenkbaren Achsschenkel 15 der hinteren Fahrzeugachse 16 befestigt ist. Der antriebsmäßig mit der Welle der Fahrzeugachse 16 verbundene Achsschenkel 15 ist durch einen nicht dargestellten, beispielsweise hydraulischen Lenkantrieb lenk- oder schwenkbar und über eine Spurstange 17 mit der entsprechenden Gradanordnung 7 an der einen Seite die Erntemaschine 1 mit dem entsprechenden Achsschenkel der Radanordnung 7 an der anderen Seite der Erntemaschine 1 verbunden.

Durch Ansteuerung sämtlicher Kolben-Zylinder-Anordnungen 11 sind die beiden Räder 8 und 9 zusammen mit der Radtrommel 10 relativ zu dem Tragring 14 und damit relativ zum Achsschenkel 15 in Richtung der Radachse RA um einen Hub verstellbar bzw. ausfahrbar und einfahrbar (Doppelpfeil A), und zwar
- für das Fahren auf öffentlichen Straßen und Wegen zur Einhaltung einer maximal zulässigen Fahrzeugbreite einfahrbar, so dass die beiden Räder 8 und 9 in eine der Mitte des Fahrzeugs näher liegende Position bewegt sind, die in der Figur 2 dargestellt ist, und
- für das Fahren auf einem Feld ausfahrbar, so dass die beiden Räder 8 und 9 zur Erhöhung der Stabilität der Erntemaschine in eine der Mitte des Fahrzeugs entfernt liegende Position bewegt sind, die in der Figur 3 dargestellt ist.

Der Bewegungshub A ist dabei bestimmt durch die in den beiden Extremstellungen jeweils aus dem Zylinder 11.2 vorstehende Länge der Kolbenstange 11.1. Es versteht sich, dass das vorbeschriebene Ein- und Ausfahren der Radanordnungen 7 in Richtung der Achse RA bevorzugt an beiden Fahrzeugseiten zeitgleich erfolgt, und zwar durch gesteuertes Beaufschlagen sämtlicher Kolben-Zylinder-Anordnungen 11 mit einem hydraulischen Druckmedium (Hydrauliköl) eines Hydraulikaggregates 18 mit Steuereinrichtung 19. Die Kolben-Zylinder-Anordnungen 11 dienen sowohl als Betätigungselemente, als auch (mit ihren Zylindern 11.1 und Kolbenstangen 11.2) als kraft- und momentübertragende Führungen zwischen der Radtrommel 10 und dem Tragring 14.

Die Hydraulikverbindung zwischen dem Hydraulikaggregat 18 bzw. der Steuereinrichtung 19 und den Kolben-Zylinder-Anordnungen 11 erfolgt über nicht dargestellte Hydraulik-Leitungen und eine hydraulische Drehdurchführung 20, die achsgleich mit der Radachse RA angeordnet ist, und zwar bei der dargestellten Ausführungsform an einem bügelartigen Steg 21 an der der Fahrzeugachse 16 abgewandten offenen Seite der Radtrommel 10. Es versteht sich, dass die Drehdurchführung 20 oder eine entsprechende Drehdurchführung auch in der Fahrzeugachse 16 oder in einem Element dieser Fahrzeugachse, beispielsweise im Achsschenkel 15 vorgesehen oder integriert sein kann.

Das Aus- und Einfahren der Radanordnungen 7, d.h. das entsprechende Betätigen der Kolben-Zylinder-Anordnungen 11 ist beispielsweise zur Reduzierung des Reifenverschleißes so gesteuert, dass dieses Ein- und Ausfahren jeweils nur dann möglich ist, wenn sich die Erntemaschine 1 mit einer Mindestgeschwindigkeit bewegt.

Da die Erntemaschine 1 einen sehr kompakten Aufbau aufweist, sind die inneren Räder 8 bei eingefahrenen Radanordnungen 7 dem Fahrzeugrahmen 2 sehr dicht benachbart angeordnet, sodass allenfalls nur ein kleiner Lenkausschlag bzw. ein geringes Schwenken der eingefahrenen Radanordnungen 7 beim Lenken möglich ist, was beim Fahren auf öffentlichen Straßen und Wegen wegen der ohnehin gelenkten vorderen Fahrzeugachse völlig ausreicht. Beim Fahren im Gelände, d.h. insbesondere beim Erntebetrieb und bei ausgefahrenen Radanordnungen 7 ein wesentlich größerer Lenkwinkel erforderlich. Dies ist insbesondere auch schon deswegen der Fall, weil das Erntefahrzeug 1 normalerweise beim Ernten mit schräg zur Fahrtrichtung gestelltem Fahrzeugrahmen 2 in der Weise bewegt wird, dass die hintere Fahrzeugachse 16 einen größeren Abstand von dem noch nicht gerodeten Bereich eines Feldes aufweist als die vordere Fahrzeugachse.

Um den unterschiedlich großen Lenkwinkel bei eingefahrenen und ausgefahrenen Radanordnungen 7 sicherzustellen, ist an einem mit den Rädern 8 und 9 nicht mitdrehenden Teil der Achse 16 innerhalb der Radtrommel 10 jeder Radanordnung 7 ein Sensor 22 vorgesehen, der mit einem an der Radtrommel 11 befestigten und die Fahrzeugachse 16 umschließenden Ring 23 zusammenwirkt. Bei der dargestellten Ausführungsform befindet sich der Ring 23 jeweils an der der Mitte des Fahrzeugrahmens 2 zugewandten offenen Seite der Radtrommel 10, sodass der jeweilige Sensor 22 bei ausgefahrener Radanordnung 7 und bei dem Sensor 22 benachbartem Ring 23 ein Sensorsignal liefert. Dieses gibt die hydraulische Lenkeinrichtung für die Radanordnungen 7 der hinteren Fahrzeugachse für den größeren Lenkwinkel oder Lenkausschlag frei gibt, während bei fehlendem Sensorsignal, d.h. bei eingefahrenen Radanordnungen 7 der Lenkausschlag beispielsweise auf einen Lenkwinkel von 10 - 15° begrenzt oder vollständig blockiert ist. Es versteht sich, dass die Sensoren 22 der beiden Radanordnungen 7 hinsichtlich ihrer Sensorsignalen nach einer UND-Funktion logisch miteinander verknüpft sind, sodass erst beim Vorliegen beider Sensorsignale, d.h. erst nach dem vollständigen Ausfahren beider Radanordnungen 7 der größere Lenkwinkel freigegeben wird.

Die Erfindung wurde voranstehend an einem Ausführungsbeispiel beschrieben. Es versteht sich, dass zahlreiche Änderungen sowie Abwandlungen möglich sind, ohne das dadurch der der Erfindung zugrunde liegende Erfindungsgedanke verlassen wird.

### Bezugszeichenliste

- 1: Erntemaschine
- 2: Fahrzeugrahmen
- 3: Rodeaggregat
- 4: Fahrerhaus
- 5: Bunker
- 6: Radanordnung der vorderen Fahrzeugachse
- 7: Radanordnung an der hinteren Fahrzeugachse
- 8,9: Rad
- 8.1, 9.1: Radfelge
- 8.2, 9.2: Reifen
- 10: Radtrommel
- 11: Kolben-Zylinder-Anordnung
- 11.1: Kolbenstange
- 11.2: Zylinder
- 12: Lager
- 13: Verbindungsstück
- 14: Tragring
- 15: Achsschenkel
- 16: hintere Fahrzeugachse
- 17: Spurstange
- 18: Hydraulikaggregat
- 19: Steuereinrichtung
- 20: hydraulische Drehdurchführung
- 21: Steg
- 22: Sensor 23
- 23: Ring
- RA: Radachse
- A: Bewegungshub der Radanordnung 7 beim Ein- und Ausfahren in Richtung der Radachse RA

## Patentansprüche

1. Selbstfahrende Erntemaschine mit wenigstens zwei zumindest teilweise lenkbaren und angetriebenen Fahrzeugachsen, von denen wenigstens eine Fahrzeugachse, beispielsweise eine rückwärtige Fahrzeugachse (16) von Felgen (8.1, 9.1) und Reifen (8.2, 9.2) gebildete Radanordnungen (7) aufweist,
**dadurch gekennzeichnet, dass** die Radanordnungen (7) der wenigstens einen Fahrzeugachse (16) jeweils zumindest zwei Räder (8, 9) aufweisen, die über kraft-und momentübertragende Führungselemente (11) in Richtung ihrer gemeinsamen Radachse (RA) an der Fahrzeugachse (16) oder an einem mit der Fahrzeugachse (16) verbundenen Tragelement (14) für eine Bewegung zwischen einer eingefahrenen Position und einer ausgefahrenen Position mittels einer Betätigungseinrichtung verschiebbar geführt sind.

2. Erntemaschine nach Anspruch 1, **dadurch gekennzeichnet, dass** die Betätigungseinrichtung eine hydraulische Betätigungseinrichtung ist.

3. Erntemaschine nach Anspruch 1 oder 2, **dadurch gekennzeichnet, dass** die Betätigungseinrichtung von einer Vielzahl von Kolben-Zylinder-Anordnungen gebildet ist, die um die Radachse (RA) verteilt vorgesehen sind.

4. Erntemaschine nach einem der vorhergehenden Ansprüche, **dadurch gekennzeichnet, dass** die Räder (8, 9) an einem gemeinsamen Radträger (10) vorgesehen sind, und dass der Radträger (10) mit den Führungselementen (11) in Richtung der Radachse (RA) zwischen der ausgefahrenen und eingefahrenen Position bewegbar ist.

5. Erntemaschine nach einem der vorhergehenden Ansprüche, **dadurch gekennzeichnet, dass** die Führungselemente von Führungsstangen (11.1) und von auf diesen gleitenden Führungsstücken (11.2) gebildet sind.

6. Erntemaschine nach Anspruch 5, **dadurch gekennzeichnet, dass** die Führungsstangen (11.1) mit ihrer Längserstreckung jeweils parallel zur Radachse (RA) orientiert und beidendig mit den Rädern (8, 9) oder mit dem Radträger (10) und die Führungsstücke (11.2) mit der Fahrzeugachse (16) oder mit dem dort befestigten Tragstück (14) verbunden sind.

7. Erntemaschine nach Anspruch 5, **dadurch gekennzeichnet, dass** die Führungsstangen (11.1) mit ihrer Längserstreckung jeweils parallel zur Radachse (RA) orientiert und beidendig mit der Fahrzeugachse (16) oder mit dem dort befestigten Tragstück (14) und die Führungsstücke (11.2) mit den Rädern (8, 9) oder mit dem Radträger (10) verbunden sind.

8. Erntemaschine nach einem der vorhergehenden Ansprüche, **dadurch gekennzeichnet, dass** die Führungselemente von Kolbenstangen (11.1) und Zylindern (11.2) der Kolben-Zylinder-Anordnungen (11) gebildet sind, die zugleich auch die hydraulische Betätigungseinrichtung bilden.

9. Erntefahrzeug nach einem der vorhergehenden Ansprüche, **dadurch gekennzeichnet, dass** das mit der Fahrzeugachse (16) verbundene Tragelement ein Tragring (14) ist.

10. Erntefahrzeug nach einem der vorhergehenden Ansprüche, **dadurch gekennzeichnet, dass** die Radanordnungen (7) aufweisende Fahrzeugachse (16) und/oder lenkbar ist.

11. Erntemaschine nach einem der vorhergehenden Ansprüche, **gekennzeichnet durch** wenigstens einen an zumindest einer Radanordnung (7) der Fahrzeugachse vorgesehenen Sensor (20) zur Überwachung des ausgefahrenen und/oder eingefahrenen Zustandes der Radanordnungen (7)

12. Erntemaschine nach Anspruch 11, **dadurch gekennzeichnet, dass** das Signal des wenigstens einen Sensors (22) bei lenkbarer Ausbildung der Fahrzeugachse (16) die Lenkung derart steuert, dass diese im eingefahrenen Zustand der Radanordnungen (7) blockiert oder auf einen Lenkwinkel begrenzt ist, der wesentlich kleiner ist als der Lenkwinkel bei ausgefahrenen Radanordnungen.
